# EUROPÄISCHE PATENTSCHRIFT

(11) **EP 3 315 010 B1**
(45) Veröffentlichungstag und Bekanntmachung des Hinweises auf die Patenterteilung: **28.08.2019**
(21) Anmeldenummer: 17001740.4
(22) Anmeldetag: 23.10.2017
(51) Int. Cl.: A01D 45/00

(54) **SPARGELERNTEVORRICHTUNG**
ASPARAGUS HARVESTING DEVICE
DISPOSITIF DE RÉCOLTE DES ASPERGES

(30) Priorität: 31.10.2016 DE 102016012997
(43) Veröffentlichungstag der Anmeldung: 02.05.2018
(73) Patentinhaber: Böckenhoff, Bernhard, 46348 Raesfeld-Erle (DE)
(72) Erfinder: Böckenhoff, Bernhard, 46348 Raesfeld-Erle (DE)
(74) Vertreter: Von Rohr Patentanwälte Partnerschaft mbB

(56) Entgegenhaltungen:
- DE-A1- 4 319 085
- DE-A1-102007 011 550
- US-A- 4 512 145

## Beschreibung

Die Erfindung betrifft eine Spargelerntevorrichtung mit wenigstens einer ein Stechmesser und eine Kolben-Zylinder-Einheit mit einem Zylinder und einem Kolben aufweisenden Stecheinrichtung.

Der Anbau von Spargel findet üblicherweise in Anbaudämmen statt. Hierbei wird auf Feldern Erde in Reihen zu entsprechenden Dämmen, in denen der Spargel heranwächst, angehäuft. Bei Spargel handelt es sich um eine stark saisonal angebotene Ware. Dies gilt insbesondere für den weißen Spargel, der nahezu vollständig lichtgeschützt im Inneren des Anbaudamms heranwächst und geerntet werden muss, kurz nachdem die Spargelstange aus dem Damm heraustritt. Insbesondere bei landwirtschaftlichen Großbetrieben erfordert die Spargelernte daher gerade zu Beginn der Saison einen immensen personellen Aufwand.

Es sind verschiedene Versuche bekannt, die körperlich anstrengende Tätigkeit des Abstechens der Spargelstangen im Anbaudamm und das Herausziehen der Stangen aus dem Damm sowie das Sammeln der geernteten Spargelstangen durch Maschineneinsatz zu vereinfachen. Nachteilig ist hierbei jedoch beispielsweise häufig, dass bei einer maschinenunterstützten Ernte ein wesentlicher Teil des Anbaudamms vollständig abgetragen wird, so dass die gezielte Ernte einzelner Spargelstangen zum jeweils idealen Zeitpunkt nicht möglich ist.

Aus der DE 43 19 085 A1 ist eine Spargelstechmaschine bekannt, bei der mittels eines von einer Antriebseinrichtung bewegten Stechmessers das individuelle Stechen einzelner Spargelstangen in einem Anbaudamm möglich ist. Bei der bekannten Spargelstechmaschine ist für jede Seite des Spargeldamms eine Kolben-Zylinder-Einheit vorgesehen, die an einem Gerüst oberhalb des Spargeldamms montiert sind. Über eine Gestängeverbindung ist mit jeder der Kolben-ZylinderEinheiten ein Spargelmesser verbunden, das seitlich in den Spargeldamm eintauchen kann. Die Spargelernte kann mit der bekannten Spargelstechmaschine nur mit vergleichsweise geringer Geschwindigkeit durchgeführt werden.

Insbesondere ist es bei der bekannten Spargelstechmaschine von Nachteil, dass es aufgrund der relativ niedrigen Stechgeschwindigkeit und der gleichzeitigen Bewegung der Spargelstechmaschine entlang des Spargeldamms zu einer größeren Beschädigung von seitlichen Bereichen des Spargeldamms kommen kann, da das Spargelmesser vergleichsweise lange im Spargeldamm verbleibt und diesen seitlich aufreißt.

Die DE 10 2007 011 550 A1 betrifft eine fahrbare Erntevorrichtung mit zumindest einem quer zur Fahrtrichtung aus- und einfahrbaren Schneidmittel zum Abtrennen von Erntegut. Die Erntevorrichtung verfügt über zumindest einen Sitzplatz für eine Bedienperson, für die ein seitlich offener Bereich zum Durchgreifen und Herausziehen von abgetrenntem Erntegut vorgesehen ist.

Die US 4,512,145 betrifft eine Erntevorrichtung zum Ernten von Spargel.

Vor diesem Hintergrund ist Aufgabe der vorliegenden Erfindung, eine Spargelerntemaschine bereitzustellen, mit der die Erntegeschwindigkeit erhöht werden kann, wobei eine Beschädigung des Spargeldamms auf ein Minimum reduziert werden soll.

Die vorgenannte Aufgabe wird durch eine Spargelerntemaschine mit den Merkmalen des Patentanspruchs 1 gelöst. Vorteilhafte Weiterbildungen sind Gegenstand der Unteransprüche.

Die erfindungsgemäße Spargelerntevorrichtung zeichnet sich dadurch aus, dass ein Stechmesser, wie bei bekannten Spargelstechmaschinen, von einer Kolben-Zylinder-Einheit bewegt wird, jedoch anders als bei bekannten Vorrichtungen der mechanische Aufwand zur Übertragung der Kraft von der Kolben-Zylinder-Einheit zum Stechmesser erheblich reduziert wird. Der Zylinder und das Stechmesser sind erfindungsgemäß derart in gegenseitiger räumlicher Nähe angeordnet, dass beide Teile im Betriebszustand der Spargelerntevorrichtung in derselben Höhe über dem Boden angeordnet sind. Der Zylinder zur Bewegung des Stechmessers ist damit, ebenso wie das Stechmesser, etwa in Abstechhöhe angeordnet. Das bedeutet, dass sowohl das Stechmesser als auch der Zylinder im Betriebszustand in einer Position bezogen auf die vertikale Richtung angeordnet sind, aus der heraus das Abstechen der Spargelstangen erfolgen kann.

Durch die enge Kopplung des Bewegungszylinders, das heißt der Kolben-Zylinder-Einheit, und des Stechmessers kann die sonst übliche, vergleichsweise komplexe Verbindungsmechanik zur Kraftübertragung wegfallen. Dies führt zum einen zu einer erheblich kostengünstigeren Herstellung der Spargelerntevorrichtung. Zum anderen wird die Handhabung der Vorrichtung durch die unmittelbare Kopplung der Kolben-Zylinder-Einheit mit dem Spargelmesser deutlich vereinfacht und gleichzeitig die Erntegeschwindigkeit erheblich erhöht.

Für eine enge Kopplung zwischen Stechmesser und der das Stechmesser bewegenden Kolben-Zylinder-Einheit ist das Stechmesser mit dem Kolben unmittelbar verbunden. Die bei der Betätigung des Stechmessers zu beschleunigende Masse ist somit auf das Stechmesser selbst und den Kolben des Zylinders beschränkt. Hierdurch kann eine hohe Beschleunigung des Stechmessers und damit letztlich eine hohe Stechgeschwindigkeit erreicht werden. Eine solche unmittelbare Kopplung von Kolben und Stechmesser ist darüber hinaus energieeffizient, da erheblich weniger dissipative Kräfte auftreten als beispielsweise in einer komplizierten Übertragungsmechanik oder einem Getriebe.

Das Stechmesser ist in der Verlängerung des Zylinders in Längsrichtung angeordnet. Vorteilhafterweise ist das Stechmesser zumindest im Wesentlichen längsparallel oder koaxial zum Bewegungszylinder oder dessen Längsachse angeordnet. Es kann in diesem Fall also auf eine verlustbehaftete Übertragung der Antriebskraft, beispielsweise über Übertragungsgestänge, verzichtet werden.

Bei der erfindungsgemäßen Spargelerntevorrichtung ist es insbesondere so, dass der Kolben des Zylinders und das Stechmesser sich beim Betrieb der Spargelerntevorrichtung in gleicher Richtung und synchron bewegen. Dies wird letztlich durch eine direkte Übertragung der Kraft der Antriebseinrichtung, das heißt der Kolben-Zylinder-Einheit, auf das Stechmesser als für die Ernte entscheidendes Bauteil erreicht.

Wenngleich der Einsatz eines kolbenstangenlosen Zylinders bevorzugt ist, lassen sich die zuvor beschriebenen Vorteile auch durch die ebenfalls erfindungsgemäße Möglichkeit erreichen, dass dem Kolben eine Kolbenstange zugeordnet ist, deren dem Kolben abgewandtes Ende als Stechmesser ausgebildet ist. Die Kolbenstange kann in diesem Fall insbesondere mehrteilig ausgebildet sein, so dass ein Stechmesseraufsatz der Kolbenstange beispielsweise austauschbar ist, wenn dies durch Verschleiß oder Beschädigung notwendig sein sollte.

Bei einer besonders bevorzugten Ausgestaltung der Erfindung ist das Stechmesser also mit dem Kolben und/oder der Kolbenstange lösbar verbunden. Neben der Austauschbarkeit im Beschädigungs- oder Verschleißfall lässt sich hierdurch zudem ein jeweils bedarfsweise an die konkrete Anwendungssituation angepasstes Werkzeug als Stechmesser einsetzen.

Grundsätzlich kann die Kolben-Zylinder-Einheit sowohl als Hydraulikzylinder als auch als Pneumatikzylinder ausgebildet sein. Insbesondere durch einen pneumatischen Betrieb lassen sich aber gegenüber bekannten Spargelerntevorrichtungen erheblich höhere Stechgeschwindigkeiten erreichen.

Bei einer bevorzugten Ausgestaltung der erfindungsgemäßen Spargelerntevorrichtung kann das Stechmesser derart schnell bewegt werden, dass die Stecheinrichtung eine Stechgeschwindigkeit von höchstens 2 s pro Stich erreicht. Bei weiter bevorzugten Ausführungsformen lassen sich darüber hinaus noch höhere Stechgeschwindigkeiten erreichen, wobei dann vorzugsweise höchstens 1 s, bevorzugt höchstens 0,5 s, besonders bevorzugt höchstens 0,3 s, pro Stich vergeht. Ein Stich umfasst in diesem Zusammenhang die vollständige Bewegung des Stechmessers der Stecheinrichtung, das heißt die Vor- und Zurückbewegung beim Stich. Durch eine derart hohe Stechgeschwindigkeit ist die Verweilzeit des Stechmessers im Anbaudamm auf ein unschädliches Maß reduziert, so dass der Anbaudamm auch bei einer vergleichsweise zügigen Bewegung der Spargelerntevorrichtung entlang des Anbaudamms nicht nennenswert beschädigt wird, wie dies beim Stand der Technik der Fall ist, wo das Spargelmesser aufgrund der geringen Stechgeschwindigkeit vergleichsweise lange im Anbaudamm verbleibt, was bei der gleichzeitigen Vorwärtsbewegung der Spargelerntevorrichtung zu einer größeren Beschädigung des Spargeldamms führt.

Für eine gezielte Steuerung der Stecheinrichtung weist die Stecheinrichtung vorzugsweise wenigstens einen Sensor zur Messung des Drucks und/oder der Druckveränderung im Zylinder, insbesondere im Pneumatikzylinder, auf.

Die Stecheinrichtung ist bevorzugt zudem mit einer Steuereinrichtung und/oder einer Erkennungseinrichtung zu optischen und/oder taktilen Erkennung einer Spargelstange gekoppelt. Dadurch lässt sich die Stecheinrichtung gezielt betätigen, wenn eine Spargelstange erkannt wird. Eine Penetration des Anbaudamms findet demnach nur dann statt, wenn tatsächlich eine Spargelstange gestochen und geerntet werden soll. Anders als bei einer unabhängig von der tatsächlichen Anwesenheit einer Spargelstange ablaufenden periodischen Bewegung des Stechmessers, kommt es hierdurch nicht zum seitlichen Zerwühlen des Anbaudamms, wodurch dieser andernfalls an Festigkeit verliert.

Es ist darüber hinaus von Vorteil, wenn alternativ oder zusätzlich auch der Kontakt des Stechmessers mit einer Spargelstange und/oder das Durchtrennen einer Spargelstange von der Steuereinrichtung und/oder der Erkennungseinrichtung erfasst wird. Eine solche Erkennung kann insbesondere durch Messung des Innendrucks des Zylinders geschehen. Der Widerstand, der dem sich bewegenden Stechmesser von einer Spargelstange entgegengebracht wird, führt letztlich zu einer kurzzeitigen Druckerhöhung im Zylinder. Durch Messung des Drucks bzw. der Druckveränderung und eine entsprechende Auswertung der Daten lässt sich somit die Berührung einer Spargelstange und deren Nachgeben beim Durchstechen detektieren.

Dies ermöglicht eine gezielte Steuerung der Stecheinrichtung derart, dass das Stechmesser nur so weit bewegt wird, wie es zum vollständigen Durchstoßen einer Spargelstange notwendig ist. Dahinterliegende, möglicherweise noch nicht zur Ernte vorgesehene Spargelstangen werden durch das Stechmesser dementsprechend nicht verletzt. Entsprechendes gilt für Steine oder andere harte Objekte, die bei einer unnötig weiten Bewegung des Stechmessers in den Anbaudamm hinein unter Umständen getroffen werden könnten, was zu einem Stumpfwerden der Stechmesserspitze bzw. der Klinge des Stechmessers führen kann. Ferner lässt die Begrenzung des Hubs des Stechmessers auf das nötige Maß eine frühzeitige Umkehr der Bewegungsrichtung des Stechmessers zu, wodurch die Stechgeschwindigkeit weiter erhöht werden kann.

Bei einer weiter bevorzugten Ausführungsform der erfindungsgemäßen Spargelerntevorrichtung kann alternativ oder zusätzlich zu einer Begrenzung des Hubs des Stechmessers bzw. einem Stoppen der Bewegung des Stechmessers auch die Kraft auf das Stechmesser in Längsrichtung bei der Vorwärtsbewegung erhöht werden, wenn die Steuereinrichtung und/oder die Stecheinrichtung derart ausgebildet ist, dass sie beim Erfassen eines Kontakts des Stechmessers mit einer Spargelstange eine Erhöhung der auf das Stechmesser in Längsrichtung wirkenden Kraft bewirkt. Dies kann insbesondere durch eine Erhöhung des Innendrucks des Zylinders der Kolben-Zylinder-Einheit bewirkt werden. Hierdurch wird die Kraft, mit der das Stechmesser etwa auf eine Spargelstange einwirkt, um ein ausreichendes Maß vergrößert, das ein einfaches und sauberes Durchschneiden einer Spargelstange ermöglicht. In der Regel reicht es aus, wenn in einem solchen Fall der Druck kurzzeitig erhöht wird bzw. die Kraft kurzzeitig vergrößert wird, das heißt insbesondere nur für den Moment des Durchstoßens bzw. -schneidens.

In einer besonders bevorzugten Ausgestaltung weist das Stechmesser und/oder die Kolbenstange eine axial, vorzugsweise innen, verlaufende Druckleitung auf. Durch eine solche Druckleitung ist es möglich, den Arbeitsdruck, durch den das Stechmesser bewegt wird, nach vorn, das heißt in den Bereich der Stechmesserspitze, zu leiten und dort nutzbar zu machen.

Insbesondere kann das Stechmesser ein vorzugsweise oberseitig angeordnetes Druckloch aufweisen, durch das der Druck aus der Druckleitung, beispielsweise in Form eines Druckluftstoßes, abgegeben werden kann. Durch einen solchen Druckstoß lassen sich insbesondere Objekte vor dem Druckloch beschleunigen. Es ist auf diese Weise beispielsweise möglich, eine durchstoßene Spargelstange pneumatisch aus dem Anbaudamm zu befördern, so dass die Spargelstange nicht erst manuell aus diesem herausgezogen werden muss, sondern lediglich eingesammelt oder aufgefangen werden muss.

Es versteht sich, dass über die Druckleitung bzw. das Druckloch nicht dauerhaft Druckluft abgegeben werden muss bzw. sollte. Ein Druckstoß kann beispielsweise dann gezielt abgegeben werden, wenn das Durchstoßen einer Spargelstange detektiert wurde.

Die Beaufschlagung der Druckleitung mit einem Überdruck kann bedarfsweise über ein schalt- bzw. steuerbares Ventil erfolgen. Alternativ oder zusätzlich kann eine Druckversorgung der Druckleitung im Stechmesser auch regelmäßig bzw. automatisch bei Erreichen einer bestimmten Hubgrenze in Vorwärtsrichtung des Stechmessers erfolgen.

Im zuvor beschriebenen Fall einer kurzzeitigen Druckerhöhung beim Erfassen einer Berührung des Stechmessers mit einer Spargelstange, um die Stange effektiv zu durchstoßen bzw. -trennen, kann die Beaufschlagung der Druckleitung und die Abgabe eines Druckstoßes aus dem Druckloch auch durch eine Beaufschlagung der Druckleitung mit dem Arbeitsdruck erfolgen, sobald dieser infolge der Erhöhung einen gewissen Grenzwert überschritten hat, worauf ein druckabhängiges Ventil öffnet und eine Verbindung zur Druckleitung und letztlich zum Druckloch freigibt.

Alternativ oder zusätzlich kann das Stechmesser auch wenigstens ein nach unten weisendes Druckloch und/oder einen Nocken aufweisen, mittels dessen das Stechmesser insbesondere bei der Vorwärts- und/oder Rückwärtsbewegung pneumatisch und/oder mechanisch verschwenkt werden kann. Die Verschwenkung findet in diesem Fall quer zur Längsrichtung, und damit beim Betrieb letztlich zur Hauptbewegungsrichtung, des Stechmessers statt. Hierbei ist eine im Betriebszustand in vertikaler Richtung erfolgende Verschwenkung, und damit zur Spargeldammoberseite hin, bevorzugt. Eine solche Bewegung des Stechmessers quer zur eigentlichen Stechbewegung kann ebenfalls genutzt werden, um eine gestochene Spargelstange aus dem Anbaudamm zu befördern. Es versteht sich, dass auch eine Kombination aus pneumatischer und mechanischer Beschleunigung einer Spargelstange vorgesehen sein kann. Beispielsweise kann eine Spargelstange nach dem Stechen zunächst durch einen Schlag infolge einer Schwenkbewegung des Stechmessers im Anbaudamm gelockert werden und nachfolgend durch einen über das obere Druckloch abgegebenen Druckstoß aus dem Damm befördert werden.

Um die Stecheinrichtung stabil und sicher an einem Anbaudamm entlang zu führen, ist die Stecheinrichtung vorzugsweise mit einem Tragrahmen verbunden. Über einen solchen Tragrahmen kann die Spargelerntevorrichtung an ein landwirtschaftliches Gerät angehängt oder an einem solchen aufgehängt werden. Der Tragrahmen übernimmt zusätzlich die Aufgabe, die bei der Hubbewegung des Kolbens und des Stechmessers auftretenden Gegenkräfte aufzunehmen und abzuleiten und somit zu gewährleisten, dass der Zylinder letztlich in gleichbleibendem Abstand zum Anbaudamm gehalten wird und lediglich das Stechmesser aus der Kolben-Zylinder-Einheit austritt und in den Anbaudamm eindringt.

Besonders bevorzugt ist die Stecheinrichtung über den Tragrahmen mit einem Fahrgestell zum Verfahren der Spargelerntevorrichtung verbunden. Ein solches Fahrgestell verleiht der Konstruktion zusätzliche Stabilität, da die Vorrichtung beim Einsatz in diesem Fall auch von unten gestützt wird und somit nicht freischwebend von einem Zugfahrzeug gehalten werden muss. Zudem erlaubt ein Fahrgestell auch eine einfache manuelle Handhabung der erfindungsgemäßen Spargelerntevorrichtung - entweder zum An- bzw. Abkoppeln oder aber falls die Vorrichtung manuell bei der Spargelernte an einem Anbaudamm verfahren werden soll.

Die kompakten Abmaße der Stecheinrichtung erlauben es, diese bei der erfindungsgemäßen Spargelerntevorrichtung vorzugsweise vollständig an einem Ausleger des Tragrahmens anzuordnen. Das Erfordernis, verschiedene Bauteile der Spargelerntevorrichtung, wie beispielsweise die Kolben-Zylinder-Einheit, das Stechmesser, eine Führung des Stechmessers sowie eine Bewegungsmechanik zur Übertragung der Kraft, entlang dem Tragrahmen anzuordnen, entfällt somit.

Weist die Spargelerntevorrichtung ein Fahrgestell auf, so ist die Stecheinrichtung darüber hinaus vorzugsweise einem Rad des Fahrgestells zugeordnet. Hierdurch erfährt die Konstruktion die Unter- bzw. Abstützung durch das Fahrgestell bzw. durch ein Rad des Fahrgestells gerade in dem Bereich, in dem beim Betrieb die größten Kräfte und Erschütterungen wirken.

Bei einer besonders bevorzugten Ausführungsform der erfindungsgemäßen Spargelerntevorrichtung ist das Fahrgestell und/oder die Spargelerntevorrichtung als solche motorisiert ausgebildet, so dass ein Betrieb unabhängig von einem angeschlossenen landwirtschaftlichen Gerät möglich ist. Insbesondere kann die Spargelerntevorrichtung bzw. das Fahrgestell selbstfahrend ausgebildet sein. Für einen Benutzer reduziert sich somit die Arbeit bei der Spargelernte fast ausschließlich auf die Kontrolle des Fahrwegs der Spargelerntevorrichtung. Das Verfahren entlang des Anbaudamms sowie das Stechen der Spargelstangen wird in diesem Fall selbsttätig von der Spargelerntevorrichtung übernommen. Eine optionale Sammeleinrichtung ermöglicht letztlich die nahezu vollständige Automatisierung des Ernteprozesses.

Zum Antrieb des Fahrgestells, einer Sammeleinrichtung, der Stecheinrichtung und/oder eines Kompressors zur Druckversorgung der Stecheinrichtung kann die Spargelerntevorrichtung insbesondere wenigstens einen Motor aufweisen. Erfindungsgemäß möglich ist jedoch auch ein externer Antrieb bzw. eine externe Versorgung der Spargelerntevorrichtung, beispielsweise durch ein Zugfahrzeug oder ein sonstiges begleitendes Aggregat möglich, an das die Spargelerntevorrichtung angeschlossen ist.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt
- Fig. 1: eine schematische Schnittdarstellung einer bevorzugten Ausführungsform der erfindungsgemäßen Spargelerntevorrichtung beim Betrieb und
- Fig. 2: eine schematische Ausschnittsdarstellung der Spargelerntevorrichtung aus Fig. 1 beim Betrieb.

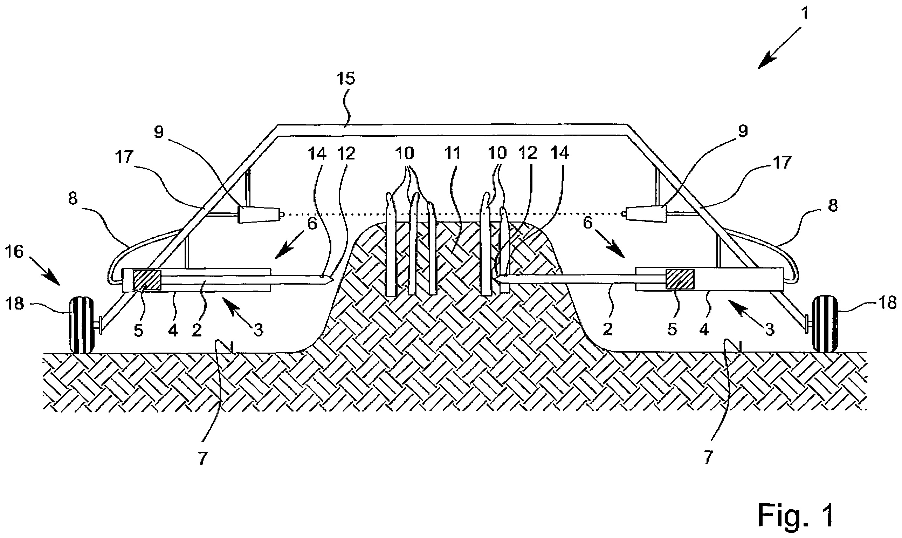

In Fig. 1 ist beispielhaft dargestellt, wie eine erfindungsgemäße Spargelerntevorrichtung 1 zur Spargelernte eingesetzt wird. Die Spargelerntevorrichtung 1 weist in der dargestellten Ausführungsform einen symmetrischen Aufbau auf. Bei der dargestellten Ausführungsform weist die Spargelerntevorrichtung 1 wenigstens zwei Stechmesser 2 auf, die jeweils mit einer Kolben-Zylinder-Einheit 3, die jeweils einen Zylinder 4 und einen Kolben 5 aufweist, Stecheinrichtungen 6 bilden.

Fig. 1 ist zu entnehmen, dass der Zylinder 4 bzw. die Kolben-Zylinder-Einheit 3 und das Stechmesser 2 im dargestellten Betriebszustand der Spargelerntevorrichtung 1 in derselben Höhe über dem Boden 7 angeordnet sind. Das Stechmesser 2 befindet sich in der Verlängerung des Zylinders 4 in Längsrichtung und ist in seiner Längsrichtung hin- und herbewegbar.

Zur Bewegung des Stechmessers 2 ist dieses mit dem Kolben 5 der Kolben-Zylinder-Einheit 3 bei der vorliegenden Ausführungsform unmittelbar verbunden. Eine mit der dargestellten Ausgestaltung vergleichbare Konstruktion ergibt sich jedoch auch, wenn das Stechmesser 2 lösbar mit einer nicht dargestellten Kolbenstange des Kolbens 5 verbunden ist oder eine solche Kolbenstange am dem Kolben 5 abgewandten Ende als Stechmesser 2 ausgebildet ist.

Vorteilhafterweise ist das Stechmesser 2 letztlich längsparallel bzw. koaxial zum Zylinder 4 der Stecheinrichtung 6 angeordnet.

Beim Betrieb, das heißt beim Einsatz der Spargelerntevorrichtung 1 zur Spargelernte, bewegen sich das Stechmesser 2 und der Kolben 5 in gleicher Bewegungsrichtung und synchron miteinander.

Der Zylinder 4 ist vorliegend als Pneumatikzylinder ausgebildet und wird über eine Versorgungsleitung 8 von einem nicht im Detail dargestellten Kompressor, gegebenenfalls mit einem Druckspeicher, mit dem nötigen Arbeitsdruck beaufschlagt.

Die kompakte Ausführungsform der Stecheinrichtung 6, bei der das Stechmesser 2 in der Verlängerung der Kolben-Zylinder-Einheit 3 angeordnet ist, ermöglicht es, die zu beschleunigende Masse bei einer Hubbewegung des Stechmessers 2 letztlich auf das Stechmesser 2 selbst und den Kolben 5 zu reduzieren. Hierdurch wird eine deutlich höhere Beschleunigung des Stechmessers 2 als bei bekannten Spargelstechmaschinen erreicht. Dies führt wiederum zu einer deutlichen Erhöhung der Stechgeschwindigkeit. Die dargestellte Ausführungsform der erfindungsgemäßen Spargelerntevorrichtung 1 erlaubt eine Stechgeschwindigkeit von unter 0,5 s pro Stich, wobei sogar eine Geschwindigkeit von weniger als 0,3 s pro Hub realisiert werden kann.

Die angegebenen Stechgeschwindigkeiten beziehen sich auf eine vollständige Hubbewegung des Stechmessers 2, das heißt einen vollständigen Zyklus einer Vor- und einer Zurückbewegung des Stechmessers 2.

Der mit dem Arbeitsdruck beaufschlagte Kolben 5 im Zylinder 4 schnellt bei einer Aktivierung der Stecheinrichtung 6 nach vorn und bewegt das Stechmesser 2 dabei mit. Vor einer Endlagendämpfung wird die Bewegungsrichtung des Kolbens 5 und des Stechmessers 2 durch ein nicht im Einzelnen dargestelltes Umschaltventil umgekehrt, wodurch eine Rückwärtsbewegung der beiden vorgenannten Bauteile eingeleitet wird.

Der Druck im Inneren des Zylinders 4 kann durch einen nicht bildlich dargestellten Sensor gemessen werden. Ein solcher Sensor kann im Inneren des Zylinders 4 angeordnet sein, jedoch auch der Versorgungsseite, das heißt der Versorgungsleitung 8 oder einer Druckversorgungseinrichtung zugeordnet sein.

Die Messung des Arbeitsdrucks bzw. einer Druckveränderung erlaubt beispielsweise die Regelung des Stechprozesses, das heißt letztlich der Hubbewegung des Stechmessers 2.

Bei der dargestellten Ausführungsform der Spargelerntevorrichtung 1 wird eine Aktivierung der Stecheinrichtung 6 insbesondere von einer Steuereinrichtung ausgelöst, wenn eine Erkennungseinrichtung 9 eine Spargelstange 10, die aus dem Anabaudamm 11, in dem sie gezogen wird, nach oben herausragt. Vorliegend erfolgt die Erkennung der Spargelstangen 10 durch die Erkennungseinrichtung 9 auf optischem Wege, beispielsweise mittels einer Lichtschranke. Tritt eine Spargelstange 10 bereits geringfügig aus dem Anbaudamm 11 nach oben heraus, zeigt dies den idealen Erntezeitpunkt an. Dies wird von der Erkennungseinrichtung 9 erkannt.

Wird eine Spargelstange 10 erfasst, so wird ein Stechvorgang ausgelöst, das heißt die Stecheinrichtung 6 in der zuvor beschriebenen Weise aktiviert.

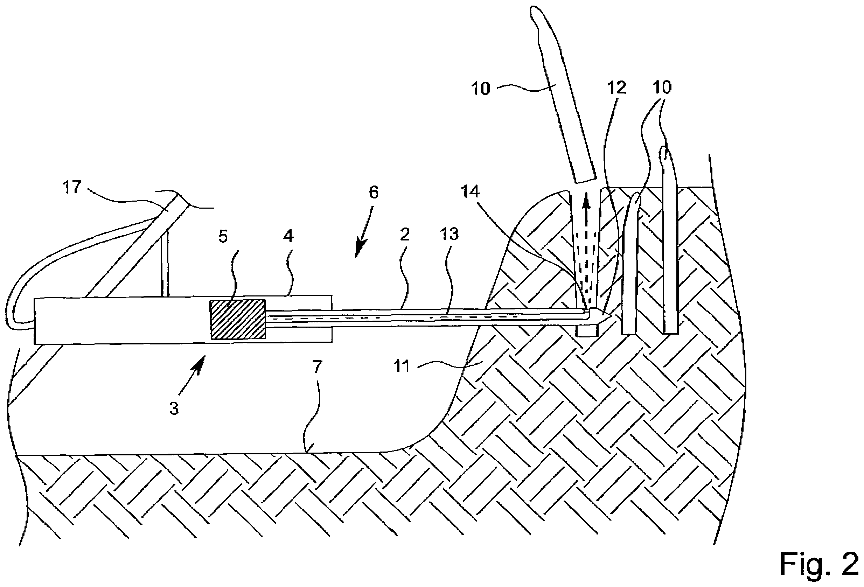

Das Stechmesser 2 dringt infolge seiner Vorwärtsbewegung seitlich in den Anbaudamm 11 ein und durchtrennt die Spargelstange 10, wie es in Fig. 1, rechte Seite, und insbesondere in Fig. 2 dargestellt ist.

Die Steuereinrichtung, welche der Stecheinrichtung 6 zugeordnet ist, erlaubt es bei der vorliegenden Ausführungsform der erfindungsgemäßen Spargelerntevorrichtung 1, die Berührung des Stechmessers 2 mit einer Spargelstange 10 ebenso wie das Durchtrennen der Spargelstange 10 durch Messung des Innendrucks des Zylinders 4 zu erkennen.

Das Stechmesser 2 kann dann in seiner Hubbewegung begrenzt werden, wenn das erfolgreiche Durchstoßen einer Spargelstange 10 festgestellt wird. Hierdurch wird verhindert, dass eine benachbarte, jedoch möglicherweise noch nicht zur Ernte vorgesehene Spargelstange 10 verletzt wird, da die Bewegung des Stechmessers 2 derart angehalten bzw. umgekehrt wird, dass die Position der Stechmesserspitze 12 nur geringfügig über die durchstochene Spargelstange 10 hinausragt, wie es in Fig. 2 dargestellt ist.

Ferner kann durch die Steuereinrichtung der Innendruck im Zylinder 4 kurzzeitig weiter erhöht werden, wenn der Kontakt des Stechmessers 2 mit einer Spargelstange 10 anhand einer Druckerhöhung im Zylinder 4 infolge des dem Stechmesser 2 entgegengebrachten Widerstands der Spargelstange 10 erkannt wird. Hierdurch kann die Spargelstange 10 letztlich effektiv und sauber durchtrennt werden und ein nur partielles Durchtrennen der Spargelstange 10 mit der Stechmesserspitze 12 wird vermieden.

Wie in Fig. 2 dargestellt ist, weist das Stechmesser 2 bei der vorliegenden, bevorzugten Ausführungsform eine axial in seinem Inneren verlaufende Druckleitung 13 auf, die bedarfsweise mit dem Arbeitsdruck der Kolben-Zylinder-Einheit 3 beaufschlagt werden kann. In diesem Fall wird über ein oberseitig im Stechmesser 2 angeordnetes Druckloch 14 ein Druckstoß abgegeben. Auf dieses Weise lässt sich beispielsweise eine gestochene Spargelstange 10 in der in Fig. 2 gezeigten Weise aus dem Anbaudamm 11 befördern und kann in der Folge manuell oder automatisch auf- bzw. eingesammelt werden. Dies trägt zur Möglichkeit einer teilweise oder vollständig automatisierten Spargelernte bei.

Die Bewegung der Spargelstange 10 aus dem Anbaudamm 11 heraus kann zudem durch eine mechanische Bewegung des Stechmessers 2 unterstützt werden. Hierzu kann das Stechmesser 2 beispielsweise ebenfalls ein in diesem Fall vorzugsweise nach unten weisendes Druckloch 14 aufweisen, durch das ein Druckstoß abgegeben wird, der das Stechmesser 2 in Richtung des auszuwerfenden Teils der Spargelstange 10 bewegt, wodurch die Spargelstange 10 vor dem eigentlichen druckluftgetriebenen Auswurf in der zuvor beschriebenen Weise im Anbaudamm 11 gelockert wird. Eine solche Schwenk- oder Kippbewegung des Stechmessers 2 kann alternativ oder zusätzlich auf mechanische Weise, etwa mittels eines Nockens, erfolgen.

Wie aus Fig. 1 ersichtlich, ist die hier beispielhaft dargestellte Ausführungsform der erfindungsgemäßen Spargelerntevorrichtung 1 symmetrisch aufgebaut, wobei im dargestellten Betriebszustand beidseitig des zu bearbeitenden Anbaudamms 11 Stecheinrichtungen 6 angeordnet sind, wodurch ein effizientes und zeitsparendes Bearbeiten des Anbaudamms 11 möglich ist. Es versteht sich, dass bei der in Fig. 1 gezeigten Schnittdarstellung lediglich zwei Stecheinrichtungen 6 gezeigt werden können, sich jedoch weitere Segmente der Spargelerntevorrichtung 1 ähnlich dem dargestellten Schnitt in die Bildebene hinein anschließen können, wodurch letztlich auf jeder Seite des Anbaudamms 11 eine Mehrzahl von Stecheinrichtungen 6 vorgesehen ist. Durch die weitere Erhöhung der Stecheinrichtungen 6 lässt sich die Geschwindigkeit, mit der ein Anbaudamm 11 abgeerntet werden kann, weiter erhöhen.

Das Grundgerüst der dargestellten Spargelerntevorrichtung 1 wird vorliegend von einem Tragrahmen 15 gebildet, der der Spargelerntevorrichtung 1 Stabilität verleiht und mit dem die Stecheinrichtungen 6 ebenso wie die Erkennungseinrichtungen 9 verbunden sind.

Die Spargelerntevorrichtung 1 weist in der dargestellten Ausführungsform zudem ein Fahrgestell 16 auf, durch das sie leicht entlang des Anbaudamms 11 verfahren werden kann. Das Fahrgestell 16 ist bei einer bevorzugten Ausführungsform selbstfahrend ausgebildet, wodurch auf ein Bewegen der Spargelerntevorrichtung 1 auf manuelle Weise oder durch ein Zugfahrzeug verzichtet werden kann.

Die aufgrund ihrer erfindungsgemäßen Beschaffenheit äußerst kompakt ausgebildeten Stecheinrichtungen 6 sind vorliegend jeweils vollständig an einem Ausleger 17 des Tragrahmens 15 angeordnet und darüber hinaus jeweils einem Rad 18 des Fahrgestells 16 zugeordnet. Dies bedeutet, dass die einzelnen Stecheinrichtungen jeweils im Bereich eines Rades 18 angeordnet sind.

Angetrieben wird die Spargelerntevorrichtung 1 in der dargestellten bevorzugten Ausführungsform durch einen nicht bildlich dargestellten Motor. Der Motor dient vorliegend zum Antrieb einerseits des Fahrgestells 16 und andererseits auch zum Betrieb der Stecheinrichtung 6 durch den Antrieb eines Kompressors zur Druckversorgung der Stecheinrichtung 6. Ferner kann ein solcher Motor zum Antrieb einer mechanischen Sammeleinrichtung dienen, die aus Gründen der Übersichtlichkeit nicht bildlich dargestellt ist und letztlich zu einer weiteren Automatisierung des Ernteprozesses beiträgt.

### Bezugszeichenliste:

- 1: Spargelerntevorrichtung
- 2: Stechmesser
- 3: Kolben-Zylinder-Einheit
- 4: Zylinder
- 5: Kolben
- 6: Stecheinrichtung
- 7: Boden
- 8: Versorgungsleitung
- 9: Erkennungseinrichtung
- 10: Spargelstange
- 11: Anbaudamm
- 12: Stechmesserspitze
- 13: Druckleitung
- 14: Druckloch
- 15: Tragrahmen
- 16: Fahrgestell
- 17: Ausleger
- 18: Rad

## Patentansprüche

1. Spargelerntevorrichtung (1) mit wenigstens einer ein Stechmesser (2) und eine Kolben-Zylinder-Einheit (3) mit einem Zylinder (4) und einem Kolben (5) aufweisenden Stecheinrichtung (6),
**dadurch gekennzeichnet,**
**dass** die Kolben-Zylinder-Einheit (3) und das Stechmesser (2) im Betriebszustand der Spargelerntevorrichtung (1) in derselben Höhe über dem Boden (7) angeordnet sind,
**dass** das Stechmesser (2) in Verlängerung des Zylinders (4) in Längsrichtung angeordnet ist und
**dass** das Stechmesser (2) mit dem Kolben (5) unmittelbar verbunden ist.

2. Spargelerntevorrichtung nach Anspruch 1, **dadurch gekennzeichnet, dass** das Stechmesser (2) zumindest im Wesentlichen längsparallel oder koaxial zum Zylinder (4) angeordnet ist.

3. Spargelerntevorrichtung nach Anspruch 1 oder 2, **dadurch gekennzeichnet, dass** sich der Kolben (5) der Kolben-Zylinder-Einheit (3) und das Stechmesser (2) sich beim Betrieb der Spargelerntevorrichtung (1) gleichgerichtet synchron bewegen.

4. Spargelerntevorrichtung nach einem der vorhergehenden Ansprüche, **dadurch gekennzeichnet, dass** dem Kolben (5) eine Kolbenstange zugeordnet ist, deren dem Kolben (5) abgewandtes Ende als Stechmesser (2) ausgebildet ist, und/oder dass das Stechmesser (2) mit dem Kolben (5) und/oder der Kolbenstange lösbar verbunden ist.

5. Spargelerntevorrichtung nach einem der vorhergehenden Ansprüche, **dadurch gekennzeichnet, dass** die Kolben-Zylinder-Einheit (3) als Pneumatikzylinder oder als Hydraulikzylinder ausgebildet ist.

6. Spargelerntevorrichtung nach einem der vorhergehenden Ansprüche, **dadurch gekennzeichnet, dass** die Stecheinrichtung (6) wenigstens einen Sensor zur Messung des Drucks und/oder der Druckveränderung im Zylinder (4) aufweist.

7. Spargelerntevorrichtung nach einem der vorhergehenden Ansprüche, **dadurch gekennzeichnet, dass** die Stecheinrichtung (6) eine Stechgeschwindigkeit von höchstens 2 s pro Stich, vorzugsweise höchstens 1 s pro Stich, bevorzugt höchstens 0,5 s pro Stich, besonders bevorzugt höchstens 0,3 s pro Stich, aufweist.

8. Spargelerntevorrichtung nach einem der vorhergehenden Ansprüche, **dadurch gekennzeichnet, dass** die Stecheinrichtung (6) mit einer Steuereinrichtung und/oder einer Erkennungseinrichtung (9) zur insbesondere optischen und/oder taktilen Erkennung einer Spargelstange (10), gekoppelt ist.

9. Spargelerntevorrichtung nach Anspruch 8, **dadurch gekennzeichnet, dass** die Steuereinrichtung und/oder die Erkennungseinrichtung (9) zum Erfassen eines Kontakts des Stechmessers (2) mit einer Spargelstange (10) und/oder des Durchtrennens einer Spargelstange (10), insbesondere durch Messung des Innendrucks des Zylinders (4), ausgebildet ist.

10. Spargelerntevorrichtung nach Anspruch 8 oder 9, **dadurch gekennzeichnet, dass** die Steuereinrichtung derart ausgebildet ist, dass sie beim Erfassen eines Kontakts des Stechmessers (2) mit einer Spargelstange (10) eine vorzugsweise kurzzeitige Erhöhung einer auf das Stechmesser (2) in Längsrichtung wirkenden Kraft, insbesondere durch Erhöhung des Innendrucks des Zylinders (4), bewirkt.

11. Spargelerntevorrichtung nach einem der vorhergehenden Ansprüche, **dadurch gekennzeichnet, dass** das Stechmesser (2) und/oder die Kolbenstange eine axial, vorzugsweise innen, verlaufende Druckleitung (13) aufweist, wobei das Stechmesser (2) vorzugsweise oberseitig ein Druckloch (14) zur pneumatischen Beaufschlagung von vor dem Druckloch (14) befindlicher Spargelstangen (10), aufweist.

12. Spargelerntevorrichtung nach einem der vorhergehenden Ansprüche, **dadurch gekennzeichnet, dass** das Stechmesser (2) wenigstens ein unteres Druckloch (14) und/oder einen Nocken zur pneumatischen und/oder mechanischen Verschwenkung quer zur Längsrichtung des Stechmessers (2) aufweist.

13. Spargelerntevorrichtung nach Anspruch 12, **dadurch gekennzeichnet, dass** das das Stechmesser (2) mit dem nach unten weisenden Druckloch derart ausgebildet ist, dass das Stechmesser (2) nach Abgabe eines Druckstoßes in Richtung des auszuwerfenden Teils der Spargelstange bewegbar ist.

14. Spargelerntevorrichtung nach einem der vorhergehenden Ansprüche, **dadurch gekennzeichnet, dass** die Stecheinrichtung (6) mit einem Tragrahmen (15) und, vorzugsweise, über den Tragrahmen (15) mit einem Fahrgestell (16) zum Verfahren der Spargelerntevorrichtung (1) verbunden ist, wobei, bevorzugt, die Stecheinrichtung (6) vollständig an einem Ausleger (17) des Tragrahmens angeordnet und, weiter bevorzugt, einem Rad (18) des Fahrgestells (16) zugeordnet ist.

15. Spargelerntevorrichtung nach Anspruch 14, **dadurch gekennzeichnet, dass** das Fahrgestell (16) und/oder die Spargelerntevorrichtung (1) motorisiert, vorzugsweise selbstfahrend, ausgebildet ist, und/oder dass ein Motor zum Antrieb des Fahrgestells (16), einer Sammeleinrichtung, der Stecheinrichtung (6) und/oder eines Kompressors zur Druckversorgung der Stecheinrichtung (6) vorgesehen ist.

## Claims

1. An asparagus harvesting apparatus (1) comprising at least one pricking device (6) having a pricking knife (2) and a piston-cylinder unit (3) having a cylinder (4) and a piston (5),
**characterised in**
**that** the piston-cylinder unit (3) and the pricking knife (2) are arranged in the operating state of the asparagus harvesting apparatus (1) at the same height above the ground (7),
**that** the pricking knife (2) in the extension of the cylinder (4) is arranged in the longitudinal direction and
**that** the pricking knife (2) is directly connected to the piston (5).

2. Asparagus harvesting apparatus according to claim 1, **characterised in that** the pricking knife (2) is arranged at least substantially longitudinally parallel to or coaxial with the cylinder (4).

3. Asparagus harvesting apparatus according to claim 1 or 2, **characterised in that** the piston (5) of the piston-cylinder unit (3) and the pricking knife (2) move synchronously in the same direction during operation of the asparagus harvesting apparatus (1).

4. Asparagus harvesting apparatus according to any one of the preceding claims, **characterised in that** a piston rod is associated with the piston (5), whose end which faces away from the piston (5) is designed as a pricking knife (2), and/or that the pricking knife (2) is releasably connected to the piston (5) and/or the piston rod.

5. Asparagus harvesting apparatus according to any one of the preceding claims, **characterised in that** the piston-cylinder unit (3) is designed as a pneumatic cylinder or as a hydraulic cylinder.

6. Asparagus harvesting apparatus according to any one of the preceding claims, **characterised in that** the pricking device (6) has at least one sensor for measuring the pressure and/or the pressure change in the cylinder (4).

7. Asparagus harvesting apparatus according to one of the preceding claims, **characterised in that** the pricking device (6) has a pricking speed of at most 2 s per prick, preferably at most 1 s per prick, preferably at most 0.5 s per prick, particularly preferably at most 0.3 s per prick.

8. Asparagus harvesting apparatus according to any one of the preceding claims, **characterised in that** the pricking device (6) is coupled to a control device and/or a detection device (9) for particular optical and/or tactile detection of an asparagus spear (10).

9. Asparagus harvesting apparatus according to claim 8, **characterised in that** the control device and/or the detection device (9) is designed to detect a contact of the pricking knife (2) with an asparagus spear (10) and/or the cutting of an asparagus spear (10), in particular by measuring the internal pressure of the cylinder (4).

10. Asparagus harvesting apparatus according to claim 8 or 9, **characterised in that** the control device is designed in such a way that, when a contact of the pricking knife (2) with an asparagus spear (10) is detected, a preferably brief increase in a force acting on the pricking knife (2) in the longitudinal direction is brought about, in particular by increasing the internal pressure of the cylinder (4).

11. Asparagus harvesting apparatus according to any one of the preceding claims, **characterised in that** the pricking knife (2) and/or the piston rod has a pressure line (13) which extends axially, preferably internally, wherein the pricking knife (2) preferably on the upper side has a pressure hole (14) for pneumatically acting on asparagus spears (10) located in front of the pressure hole (14).

12. Asparagus harvesting apparatus according to any one of the preceding claims, **characterised in that** the pricking knife (2) has at least one lower pressure hole (14) and/or a cam for pneumatic and/or mechanical pivoting transversely to the longitudinal direction of the pricking knife (2).

13. Asparagus harvesting apparatus according to claim 12, **characterised in that** the pricking knife (2) is designed with the downwardly pointing pressure hole such that the pricking knife (2) is movable in the direction of the part of the asparagus spear to be ejected after delivery of a pressure surge.

14. Asparagus harvesting apparatus according to one of the preceding claims, **characterised in that** the pricking device (6) is connected to a support frame (15) and, preferably, via the support frame (15) to a chassis (16) for moving the asparagus harvesting apparatus (1), wherein, preferably, the pricking device (6) is arranged completely on a boom (17) of the support frame and, more preferably, associated with a wheel (18) of the chassis (16).

15. Asparagus harvesting apparatus according to claim 14, **characterised in that** the chassis (16) and/or the asparagus harvesting apparatus (1) is motorised, preferably self-propelled, and/or that a motor is provided for driving the chassis (16), a collecting device, the pricking device (6) and/or a compressor for supplying pressure to the pricking device (6).

## Revendications

1. Dispositif de récolte d'asperges (1) comprenant d'au moins un dispositif de coupe (6) comprenant un couteau de coupe (2) et une unité piston-cylindre (3) comprenant d'un cylindre (4) et d'un piston (5),
**caractérisé en ce que**
l'unité piston-cylindre (3) et le couteau de coupe (2) sont disposés à la même hauteur au-dessus du sol (7) dans l'état de fonctionnement du dispositif de récolte des asperges (1),
le couteau de coupe (2) est disposé dans le prolongement du cylindre (4) dans la direction longitudinale et
le couteau de coupe (2) est directement relié au piston (5).

2. Dispositif de récolte des asperges selon la revendication 1, **caractérisé en ce que** le couteau de coupe (2) est disposé sur un plan au moins essentiellement parallèle dans le sens de la longueur ou coaxial par rapport au cylindre (4).

3. Dispositif de récolte d'asperges selon la revendication 1 ou 2, **caractérisé en ce que** le piston (5) de l'unité piston-cylindre (3) et le couteau de coupe (2) se déplacent de manière synchrone dans la même direction quand le dispositif de récolte des asperges (1) est en fonctionnement.

4. Dispositif de récolte d'asperges selon l'une quelconque des revendications précédentes, **caractérisé en ce que** le piston (5) est attribué d'une tige de piston, dont l'extrémité opposée du piston (5) se présente sous la forme d'un couteau de coupe (2), et/ou en ce que le couteau de coupe (2) est relié de manière amovible au piston (5) et/ou à la tige de piston.

5. Dispositif de récolte d'asperges selon l'une quelconque des revendications précédentes, **caractérisé en ce que** l'unité piston-cylindre (3) est conçue en tant que vérin pneumatique ou vérin hydraulique.

6. Dispositif de récolte d'asperges selon l'une quelconque des revendications précédentes, **caractérisé en ce que** le dispositif de coupe (6) comporte au moins un capteur pour mesurer la pression et/ou la variation de pression dans le cylindre (4).

7. Dispositif de récolte d'asperges selon l'une quelconque des revendications précédentes, **caractérisé en ce que** le dispositif de coupe (6) a une vitesse de coupe de 2 s par coup au plus, de préférence de 1 s par coup au plus, mieux encore de 0,5 s par coup au plus et idéalement de 0,3 s par coup au plus.

8. Dispositif de récolte des asperges selon l'une quelconque des revendications précédentes, **caractérisé en ce que** le dispositif de coupe (6) est couplé à un dispositif de commande et/ou un dispositif de reconnaissance (9) notamment pour la reconnaissance optique et/ou tactile d'une tige d'asperge (10).

9. Dispositif de récolte d'asperges selon la revendication 8, **caractérisé en ce que** le dispositif de commande et/ou le dispositif de reconnaissance (9) est conçu pour détecter un contact du couteau (2) de coupe avec une tige (10) d'asperge et/ou le passage d'une tige (10) d'asperge, en particulier en mesurant la pression interne du cylindre (4).

10. Dispositif de récolte d'asperges selon la revendication 8 ou 9, **caractérisé en ce que** le dispositif de commande est conçu de telle sorte que, lorsqu'un contact du couteau de coupe (2) avec une tige d'asperge (10) est détecté, il provoque une augmentation, de préférence à court terme, de la force agissant sur le couteau de coupe (2) dans la direction longitudinale, notamment en augmentant la pression interne du cylindre (4).

11. Dispositif de récolte d'asperges selon l'une quelconque des revendications précédentes, **caractérisé en ce que** le couteau de coupe (2) et/ou la tige de piston présente une conduite de pression (13) s'étendant axialement, de préférence intérieurement, le couteau de coupe (2) présentant de préférence sur sa face supérieure un trou de pression (14) pour agir pneumatiquement sur les tiges d'asperge (10) situées devant le trou de pression (14).

12. Dispositif de récolte d'asperges selon l'une quelconque des revendications précédentes, **caractérisé en ce que** le couteau de coupe (2) présente au moins un trou de pression inférieur (14) et/ou une came pour un pivotement pneumatique et/ou mécanique transversalement à la direction longitudinale du couteau de coupe (2).

13. Dispositif de récolte d'asperges selon la revendication 12, **caractérisé en ce que** le couteau de coupe (2) comprenant le trou de pression dirigé vers le bas est conçu de telle sorte qu'il (2) puisse être déplacé dans la direction de la partie de la tige d'asperge à éjecter après une montée en pression.

14. Dispositif de récolte d'asperges selon l'une quelconque des revendications précédentes, **caractérisé en ce que** le dispositif de coupe (6) est relié à un cadre porteur (15) et, de préférence, par l'intermédiaire du cadre porteur (15) à un châssis (16) pour déplacer le dispositif de récolte d'asperges (1), le dispositif de coupe (6) reposant entièrement sur une flèche (17) du cadre porteur et étant, de préférence, associé à une roue (18) du châssis (16).

15. Dispositif de récolte d'asperges selon la revendication 14, **caractérisé en ce que** le châssis (16) et/ou le dispositif de récolte d'asperges (1) est motorisé, de préférence automoteur, et/ou **en ce qu'**un moteur sert à entraîner le châssis (16), un dispositif collecteur, le dispositif de coupe (6) et/ou un compresseur pour alimenter en pression le dispositif de coupe (6).
